# EUROPEAN PATENT APPLICATION

(11) **EP 2 400 730 A1**
(43) Date of publication of application: **28.12.2011**
(21) Application number: 10743402.9
(22) Date of filing: 05.02.2010
(51) Int. Cl.: H04M 1/247, G06F 17/30

(54) **LOCAL SEARCH METHOD FOR A MOBILE PHONE**

(30) Priority: 23.02.2009 CN 200910105524
(71) Applicant: Huizhou Tcl Mobile Communication Co., Ltd, Guangdong 518067 (CN)
(72) Inventor: ZHAO, Hai, Guangdong 518067 (CN)
(74) Representative: Brachmann, Roland W.
(86) International application number: PCT/CN2010/070525
(87) International publication number: WO 2010/094221

(57) **Abstract**

A local search method for a mobile phone is provided by the invention, which includes the following steps: step a, loading a local browser and a local database of a mobile phone, and prompting a user to input search words; step b, displaying search results according to search words inputted by the user and listing a function list. By searching the local database using the local browser, the local search method for a mobile phone provided by the invention is capable of obtaining all the function names related to key words and displaying the names in the display list of the browser, thus allowing the user to select and execute the corresponding function easily. The method facilitates the user greatly.

## Description

### Technical Field

This invention relates to the field of handsets, in particular, a local search method for a handset.

### Background Art

With the common usage and quick development of handsets, the handsets nowadays possess more and more functions. However, the existing handsets provide functions substantially in a mode of menus, and the menu tree has been fixed when the handsets leave the factory. Even though some factories provide certain ways to allow users to modify the menu function, there are still many obstacles and un-accustomedness for many users to get familiar with a new handset having multiple functions. It is usually not easy for users to immediately accustom themselves to the new interface, and they even cannot find the desired function quickly, particularly in the process of changing to a handset of a different brand or a handset having a different operating system.

### Summary of the Invention

This invention aims to provide a local search method for a handset, so as to overcome the defect of uneasy usage of a handset due to complex functions of handset in the prior art.

The local search method for a handset provided in the present invention comprises the following steps:
- step a, loading a handset to a local browser and a local database, and prompting the user to input a retrieval word;
- step b, displaying a search result and listing a function list based on the retrieval word input by the user.

More specifically, first it is determined whether the user has turned on a local search function prior to performing step a, and step a is performed if the user has turned on the local search function.

More specifically, the local search method for a handset further comprises step c after step b: the local browser loads the application selected by the user based on the user's selection if an eligible result is searched.

More specifically, a reference counting of the selected application is added after the application selected by the user is loaded by the local browser.

More specifically, the user is prompted of a failure search if no eligible result is searched in step b.

More specifically, the user is prompted to re-search by simplifying the keywords if no eligible result is searched in step b.

More specifically, Chinese or English is used as retrieval words in said step b.

The local search method for a handset provided by the present invention obtains all the function titles related to the keywords by searching the local database using the local browser and displays them in a display list of the browser. The user may choose to perform a corresponding function directly, so it greatly facilitates the user.

### Brief Description of the Drawings

- FIG.1: is a schematic flow of the local search method for a handset as disclosed in the present invention;
- FIG.2: is a schematic diagram for performing a local search using Chinese keywords in the present invention;
- FIG.3: is a schematic diagram for performing a local search using English keywords in the present invention.

### Detailed Description of the Preferred Embodiments

To make the objects, the technical solutions and the advantages of this invention clearer, the invention is further explained in a greater detail in combination with the accompanying drawings and the embodiments. It should be understood that the embodiments described here are only for explaining this invention, but not for limiting this invention.

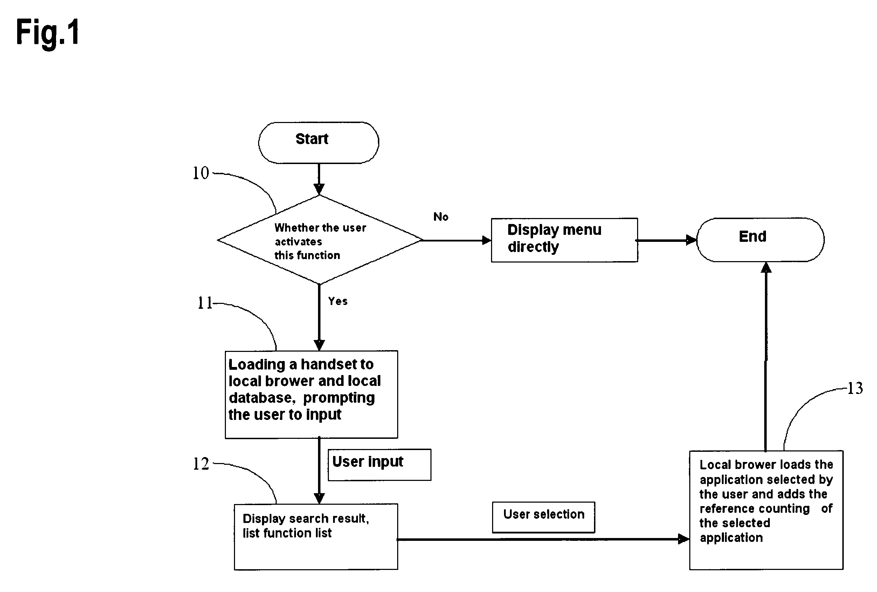

Referring to FIG.1, the local search method for a handset provided in the present invention comprises the following steps:
First, it is determined whether the user has turned on the local search function in step 10. If the user has not turned on the local search function out of consideration for privacy protection or other aspects, then directly display the menu and end.

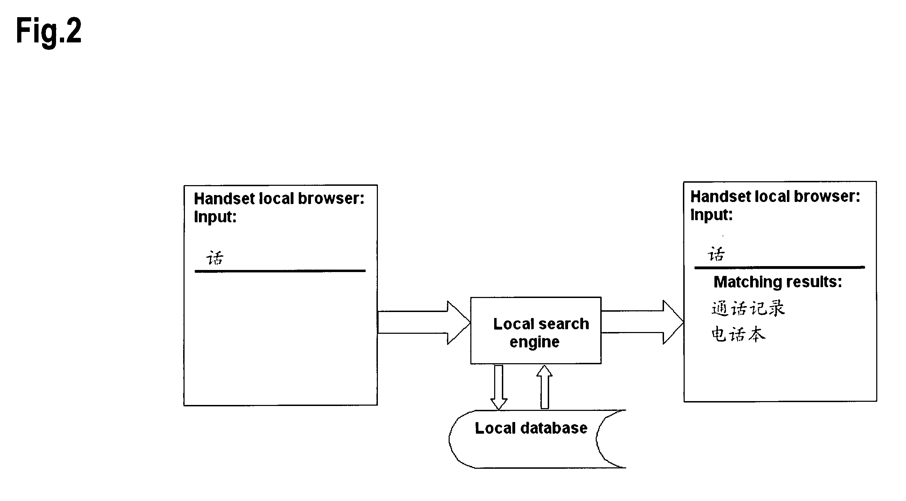

If the user has turned on the local search function, the handset is loaded to a local browser and a local database in step 11 and the user is prompted to input the retrieval words. With reference to FIG.2, suppose that the user inputs a retrieval word of Chinese character " 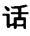 " then a search result is displayed and a function list is listed based on the retrieval word input by the user in step 12. For example, based on the retrieval word of Chinese character " 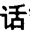 ", the local database is retrieved via a local search engine to obtain matched results: " 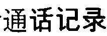 " and " 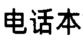 ". Step 13 is finally performed, and if an eligible result is searched, then the local browser loads the application selected by the user and adds the reference counting of the selected application based on the user's selection. For example, if the user selects a function of "call register", then the function of call register is turned on.

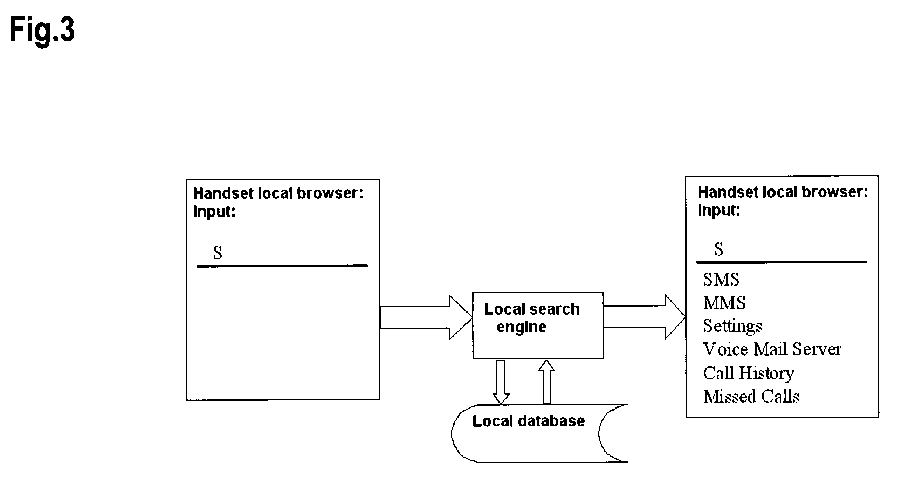

Certainly, as shown in FIG.3, English retrieval is also supported. For example, if a retrieval is performed by inputting a letter "S", then the retrieval results may be: SMS (short message), MMS (multimedia message), Settings (settings), Voice Mail Server (voice mail server), Call History (call history), Missed Calls (missed calls) etc.

The local search method for a handset provided in the present invention is easy to use. The user can perform a retrieval of the function information of a handset by inputting words only. The method can be used flexibly, and the user can turn on or turn off this function according to the need.

The above descriptions are the preferred embodiments of the present invention, but they are not used to limit the invention. For example, it is required to prompt the user of a failure search or a re-search by simplifying the keywords etc. if no eligible result is searched in step 12. Any amendments, equivalent substitutions and improvements etc. made within the basic spirits and rules of the present invention shall be included in the protection scope claimed in the present invention.

## Claims

1. A local search method for a handset, **characterized in** comprising the following steps:
- step a, loading a handset to a local browser and a local database, and prompting the user to input a retrieval word;
- step b, displaying a search result and listing a function list based on the retrieval word input by the user.

2. The local search method for a handset according to claim 1, further comprising first determining whether the user has turned on a local search function prior to performing said step a, and performing step a if the user has turned on the local search function.

3. The local search method for a handset according to claim 1, further comprising step c after step b: loading the application selected by the user by the local browser based on the user's selection if an eligible result is searched.

4. The local search method for a handset according to claim 3, further comprising adding a reference counting of the selected application after the application selected by the user is loaded by the local browser.

5. The local search method for a handset according to claim 1, further comprising prompting the user of a failure search if no eligible result is searched in step b.

6. The local search method for a handset according to claim 1, further comprising prompting the user to re-search by simplifying the keywords if no eligible result is searched in step b.

7. The local search method for a handset according to claim 1, further comprising using Chinese or English as retrieval words in step b.
